# EUROPEAN PATENT APPLICATION

(11) **EP 2 974 960 A1**
(43) Date of publication of application: **20.01.2016**
(21) Application number: 14764042.9
(22) Date of filing: 12.03.2014
(51) Int. Cl.: B64D 11/02

(54) **AIRPLANE LAVATORY UNIT**

(30) Priority: 14.03.2013 JP 2013051453
(71) Applicant: The Yokohama Rubber Co., Ltd., Minato-ku Tokyo 105-8685 (JP)
(72) Inventor: KOYAMA, Takashi, Hiratsuka-shi Kanagawa 254-8601 (JP); KOBAYASHI, Takafumi, Hiratsuka-shi Kanagawa 254-8601 (JP)
(74) Representative: Dilg, Haeusler, Schindelmann Patentanwaltsgesellschaft mbH
(86) International application number: PCT/JP2014/001396
(87) International publication number: WO 2014/141701

(57) **Abstract**

A wheelchair-accessible aircraft lavatory unit is provided while ensuring the number of lavatories, thereby reducing the amount of space occupied by the aircraft lavatory unit within the aircraft.

A movable wall section (38) can be moved to a standard position to allow two lavatories (28A, 28B) to be used separately. The movable wall section (38) can be moved to a non-standard position to join the two lavatories (28A, 28B) and establish a broad space (S) in which a wheelchair can turn around within the aircraft lavatory unit (10A). A large opening (32A) formed by connecting two openings (32) can be formed in a front wall (14) by moving the movable wall section (38) to the non-standard position and opening doors (34) of the lavatories (28A, 28B), which is advantageous in allowing for easy access to an aircraft lavatory unit (10A).

## Description

### TECHNICAL FIELD

The present invention relates to an aircraft lavatory unit.

### BACKGROUND

In passenger aircraft, there is a demand to provide the maximum possible number of seats, which directly affects profits; thus, the lavatories of aircraft lavatory units are small in size (see Patent Document 1). In aircraft comprising multiple aisles (so-called "wide-body aircraft"), in addition to the demand regarding the number of lavatories, it is mandatory to provide aircraft lavatory units for wheelchair users.

### PRIOR ART DOCUMENT

### Patent Document

Patent Document 1: Japanese Unexamined Patent Application Publication No. 2004-203167

### SUMMARY OF THE INVENTION

### Problems to be Solved by the Invention

From a viewpoint of increasing the number of lavatories, it is considered to provide two lavatories separated by a partition wall in the interior of a single aircraft lavatory unit. In other words, whereas two walls would normally be present at the boundary between two lavatories when arranging two aircraft lavatory units each containing a single lavatory in a row, only a single wall is present in the aircraft lavatory unit described above, which is advantageous for providing two lavatories in limited space.

Meanwhile, it is necessary to ensure sufficient space in a wheelchair-accessible aircraft lavatory unit so as to accommodate wheelchairs while the lavatory is in use, resulting in the need for roughly 1.5 times the amount of space in an ordinary lavatory.

For this reason, it is disadvantageous for increasing the number of seats simply to provide a wheelchair-accessible aircraft lavatory unit.

The present invention was conceived in view of the circumstances described above, and has an object of providing an aircraft lavatory unit that allows for the provision of a wheelchair-accessible aircraft lavatory unit while ensuring the number of lavatories, reduces the amount of space occupied by the aircraft lavatory unit in the interior of the aircraft, and is advantageous for increasing the number of seats.

### Means to Solve the Problem

In order to achieve the object described above, the present invention is an aircraft lavatory unit for installation in the interior of an aircraft, the unit being provided with two lavatories separated by a partition wall within a single body frame, the unit being characterized in that at least part of the partition wall is configured as a movable wall section that can be moved from a standard position at which the wall separates the two lavatories to a non-standard position at which the two lavatories are joined.

### EFFECT OF THE INVENTION

In accordance with the present invention, the two lavatories can be used separately by setting the movable wall section to the standard position, or joined by moving the movable wall section to the non-standard position so as to allow for a space wide enough to accommodate a wheelchair within the aircraft lavatory unit while the lavatory is in use.

Accordingly, a single aircraft lavatory unit can be made to function both as an ordinary aircraft lavatory unit for non-disabled passengers and as a wheelchair-accessible aircraft lavatory unit simply by moving the movable wall section.

The need to expand a single aircraft lavatory unit provided within an aircraft into a wheelchair-accessible aircraft lavatory unit is thereby eliminated, thereby reducing the amount of space occupied by the aircraft lavatory unit within the interior of the aircraft comprising the wheelchair-accessible aircraft lavatory unit, which is advantageous for increasing the number of seats.

### BRIEF DESCRIPTION OF THE DRAWINGS(S)

FIG. 1 is a perspective view of an aircraft lavatory unit 10A according to a first embodiment in which doors 34 are in a closed state.
FIG. 2 is a perspective view of the aircraft lavatory unit 10A according to the first embodiment in which doors 34 are in an open state.
FIG. 3 is a plan view of the aircraft lavatory unit 10A according to the first embodiment in which the doors 34 are closed and a movable wall section 38 is at a standard position.
FIG. 4 is a plan view of the aircraft lavatory unit 10A according to the first embodiment in which the doors 34 are open and the movable wall section 38 is at a standard position.
FIG. 5 is a plan view of the aircraft lavatory unit 10A according to the first embodiment in which the doors 34 are open and the movable wall section 38 is at a non-standard position.
FIG. 6 is a plan view of the aircraft lavatory unit 10A according to the first embodiment in which the doors 34 are closed and the movable wall section 38 is at a non-standard position.
FIG. 7 is a plan view of the aircraft lavatory unit 10A according to a modified example of the first embodiment in which the doors 34 are open and the movable wall section 38 is at a non-standard position.
FIG. 8 is a plan view of the aircraft lavatory unit 10A according to another modified example of the first embodiment in which the doors 34 are closed and the movable wall section 38 is at a non-standard position.
FIG. 9 is a plan view of an aircraft lavatory unit 10B according to a second embodiment in which doors 34 are closed and a movable wall section 38 is at a standard position.
FIG. 10 is a plan view of the aircraft lavatory unit 10B according to the second embodiment in which the doors 34 are open and the movable wall section 38 is being moved from the standard position to a non-standard position.
FIG. 11 is a plan view of the aircraft lavatory unit 10B according to the second embodiment in which the doors 34 are open and the movable wall section 38 is at the non-standard position.
FIG. 12 is a plan view of the aircraft lavatory unit 10B according to the second embodiment in which the doors 34 are closed and the movable wall section 38 is at the non-standard position.
FIG. 13 is a plan view of an aircraft lavatory unit 10C according to a third embodiment in which doors 34 are closed and a movable wall section 38 is at a standard position.
FIG. 14 is a plan view of the aircraft lavatory unit 10C according to the third embodiment in which the doors 34 are open and the movable wall section 38 is at the standard position.
FIG. 15 is a plan view of the aircraft lavatory unit 10C according to the third embodiment in which the doors 34 are open and the movable wall section 38 is at a non-standard position.
FIG. 16 is a plan view of the aircraft lavatory unit 10C according to the third embodiment in which the doors 34 are closed and the movable wall section 38 is at the non-standard position.
FIG. 17 is a plan view of an aircraft lavatory unit 10D according to a fourth embodiment in which doors 34 are closed and a movable wall section 38 is at a standard position.
FIG. 18 is a plan view of the aircraft lavatory unit 10D according to the fourth embodiment in which the doors 34 are open and the movable wall section 38 is at the standard position.
FIG. 19 is a plan view of the aircraft lavatory unit 10D according to the fourth embodiment in which the doors 34 are open and a movable wall 9 is at a non-standard position;
FIG. 20 is a plan view of the aircraft lavatory unit 10D according to the fourth embodiment in which the doors 34 are closed and the movable wall section 38 is at the non-standard position.
FIG. 21 is a plan view of an aircraft lavatory unit 10E according to a fifth embodiment in which doors 34 are closed and a movable wall section 38 is at a standard position.
FIG. 22 is a plan view of the aircraft lavatory unit 10E according to the fifth embodiment in which the doors 34 are open and the movable wall section 38 is at the standard position.
FIG. 23 is a plan view of the aircraft lavatory unit 10E according to the fifth embodiment in which the doors 34 are open and the movable wall section 38 is at a non-standard position.
FIG. 24 is a plan view of the aircraft lavatory unit 10E according to the fifth embodiment in which the doors 34 are closed and the movable wall section 38 is at the non-standard position.
FIG. 25 is a plan view of an aircraft lavatory unit 10F according to a sixth embodiment in which doors 34 are closed and a movable wall section 38 is at a standard position.
FIG. 26 is a plan view of the aircraft lavatory unit 10F according to the sixth embodiment in which the doors 34 are open and the movable wall section 38 is being moved from the standard position to a non-standard position.
FIG. 27 is a plan view of the aircraft lavatory unit 10F according to the sixth embodiment in which the doors 34 are closed and the movable wall section 38 is at the non-standard position.
FIG. 28 is a plan view of a modified example of the aircraft lavatory unit 10F according to the sixth embodiment in which the doors 34 are closed and the movable wall section 38 is at the non-standard position.
FIG. 29 is a plan view of an aircraft lavatory unit 10G according to a seventh embodiment in which doors 34 are open and a movable wall section 38 is at a standard position.
FIG. 30 is a plan view of the aircraft lavatory unit 10G according to the seventh embodiment in which the doors 34 are open and the movable wall section 38 is at the standard position.
FIG. 31 is a plan view of the aircraft lavatory unit 10G according to the seventh embodiment in which the doors 34 are open and the movable wall section 38 is being moved from the standard position to a non-standard position.
FIG. 32 is a plan view of the aircraft lavatory unit 10G according to the seventh embodiment in which the doors 34 are closed and the movable wall section 38 is at the non-standard position.
FIG. 33 is a plan view of an aircraft lavatory unit 10H according to an eighth embodiment in which doors 34 are closed and the movable wall section 38 is at a standard position.
FIG. 34 is a plan view of the aircraft lavatory unit 10H according to the eighth embodiment in which the doors 34 are open and the movable wall section 38 is at the standard position.
FIG. 35 is a plan view of the aircraft lavatory unit 10H according to the eighth embodiment in which the doors 34 are open and the entirety of a second wall panel 3852 is positioned outside the aircraft lavatory unit.
FIG. 36 is a plan view of the aircraft lavatory unit 10H according to the eighth embodiment in which the doors 34 are open and the movable wall section 38 is at a non-standard position.
FIG. 37 is a plan view of the aircraft lavatory unit 10H according to the eighth embodiment in which the doors 34 are closed and the movable wall section 38 is at the non-standard position.
FIG. 38 is a plan view of a fitting 42 provided at the end of the movable wall section 38 and seal members 46 provided in the doors 34.
FIG. 39 is an explanatory illustration of a securing mechanism 40.
FIG. 40A is an explanatory illustration of the standard position of the movable wall section 38 according to the third embodiment, and FIG. 40B is an explanatory illustration of the non-standard position of the movable wall section 38.
FIG. 41A is an explanatory illustration of the standard position of the movable wall section 38 according to the fourth embodiment, and FIG. 41B is an explanatory illustration of the non-standard position of the movable wall section 38.
FIG. 42A is a front view of the movable wall section 38 according to the fifth embodiment, and FIG. 42B is a view along arrow B in FIG. 42A.

### BEST MODE FOR CARRYING OUT THE INVENTION

### First embodiment

Next, various embodiments of the aircraft lavatory unit according to the present invention will be described with reference to the attached drawings, starting with a first embodiment.

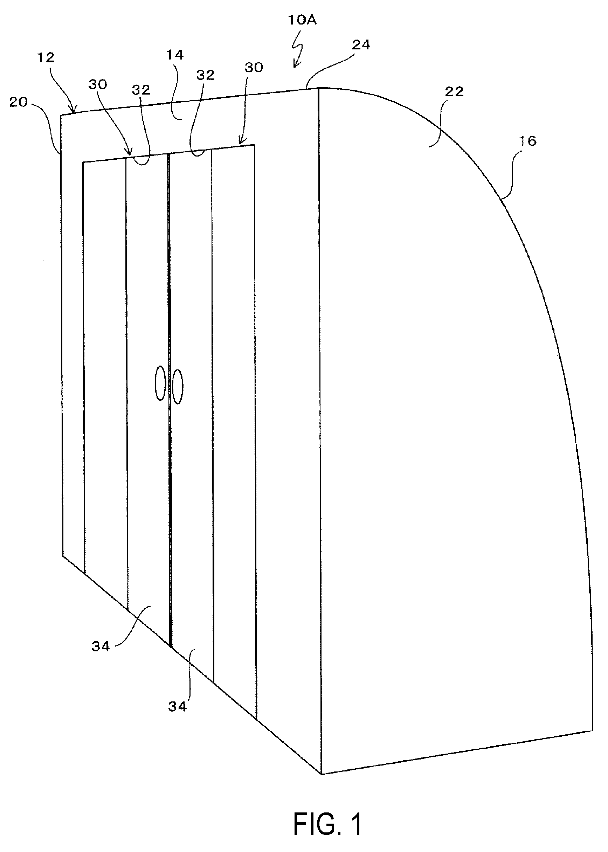

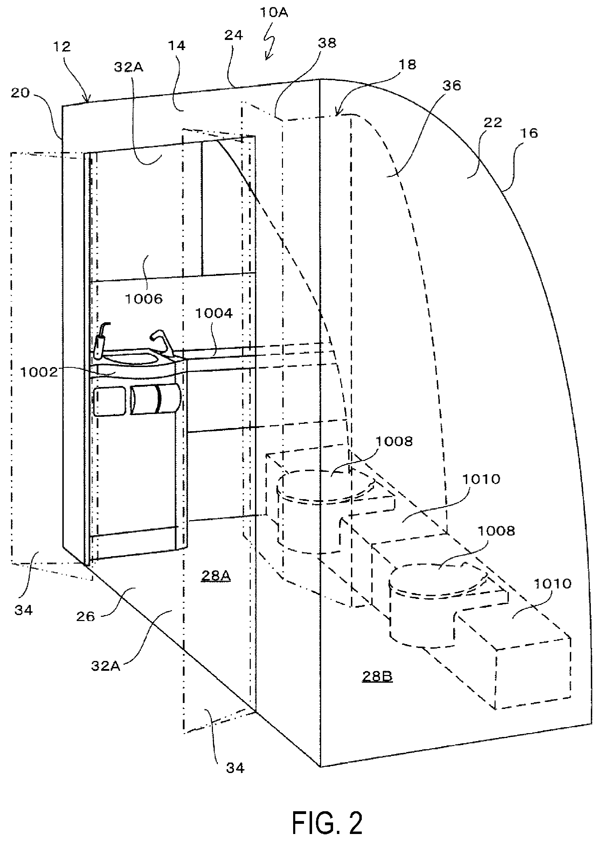

As illustrated in FIGS. 1 and 2, an aircraft lavatory unit 10A according to the first embodiment is installed on the floor of an aircraft.

The aircraft lavatory unit 10A comprises a single body frame 12, the body frame 12 comprising a single front wall 14, a single rear wall 16 facing the front wall 14, a partition wall 18, left and right side walls 20, 22, a single ceiling (ceiling wall) 24, and a single floor (bottom wall) 26.

Within the interior of the body frame 12 are provided two adjacent lavatories 28A, 28B, which are a first lavatory 28A and a second lavatory 28B, separated by a partition wall 18, allowing for reduced space occupation compared to arrangements in which two aircraft lavatory units each containing a single lavatory are disposed side-by-side.

Entrances 30 for entering and exiting the lavatories 28A, 28B are provided in the front wall 14, each of the entrances 30 being constituted by an opening 32 provided in the front wall 14 and a door 34 for opening and closing the opening 32.

As illustrated in FIG. 2, each of the lavatories 28A, 28B is provided with a sink 1002, a counter 1004, and a storage shelf 1006 provided in the side walls 20, 22, with toilets 1008 being disposed in front of the rear wall 16, and cabinets 1010 housing peripheral equipment for the aircraft lavatory unit 10A being provided behind and to the right and left of the rear of the toilets 1008.

The partition wall 18 extends between the front wall 14 and the rear wall 16 in parallel with the left and right side walls 20, 22.

Part of the partition wall 18 is configured as an immovable fixed wall section 36, and the rest of the partition wall 18 is configured as a movable wall section 38 that can be moved from a standard position at which the wall separates the two lavatories 28A, 28B to a non-standard position at which the two lavatories 28A, 28B are joined.

In the present invention, the term "body frame 12" refers to those parts of the front wall 14, rear wall 16, partition wall 18, left and right side walls 20, 22, ceiling 24, and floor 26 not including the movable wall section 38, or not including the partition wall 18 if the movable wall section 38 is constituted by the entirety of the partition wall 18.

In the present embodiment, the fixed wall section 36 is that portion extending from the rear wall 16 to the cabinets 1010, and the movable wall section 38 is that portion extending from the front of the cabinets 1010 to the front wall 14. Accordingly, the movable wall section 38 has a width equivalent to the distance from the area in front of the rear wall 16 to the front wall 14.

The non-standard position may be any location such that the two lavatories 28A, 28B are joined and space sufficient to accommodate a wheelchair is secured within the interior of the aircraft lavatory unit 10A even while the lavatory is in use when the movable wall section 38 is moved to the non-standard position, and may be within the aircraft lavatory unit 10A or outside the aircraft lavatory unit 10A.

The movable wall section 38 has a height such that it extends from the floor 26 to the ceiling 24 of the lavatories 28A, 28B, and a width extending in a direction orthogonal to its height.
The height of the movable wall section 38 may extend to any location below the ceiling 24; however, because the wall section hanging from the ceiling 24 remains along with the fixed wall section 36 when the movable wall section 38 is moved to the non-standard position in such cases, it is advantageous for the movable wall section 38 to extend from the floor 26 to the ceiling 24 for the sake of design as well as to increase the vertical dimension of the joined section and make the lavatory easier to use, barring the presence of limiting factors such as interference with other portions during movement.

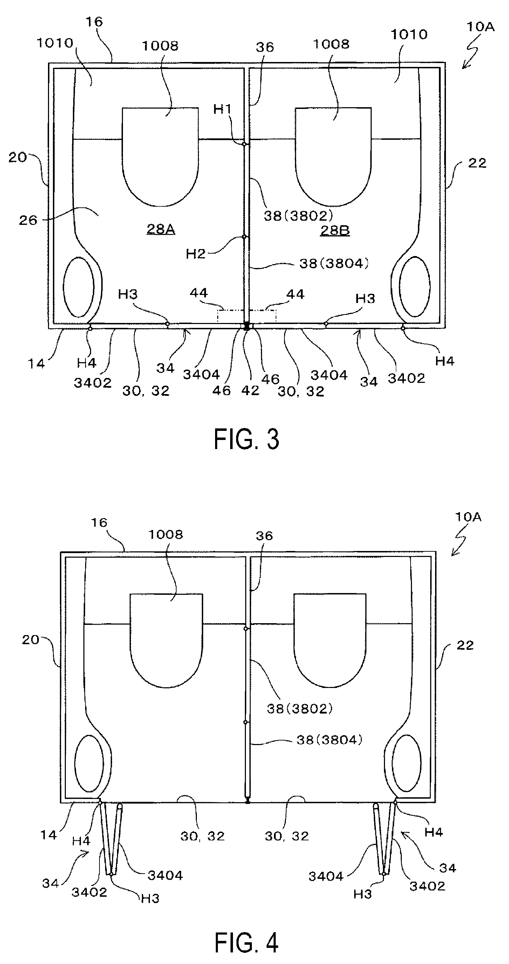

As illustrated in FIGS. 3 to 6, the movable wall section 38 is constituted by a plurality of wall panels foldably joined to each other.

In the present embodiment, the movable wall section 38 is constituted by a first wall panel 3802 swingably joined to the fixed wall section 36 by a hinge H1 and a second wall panel 3804 swingably joined to the first wall panel 3802 by a hinge H2.

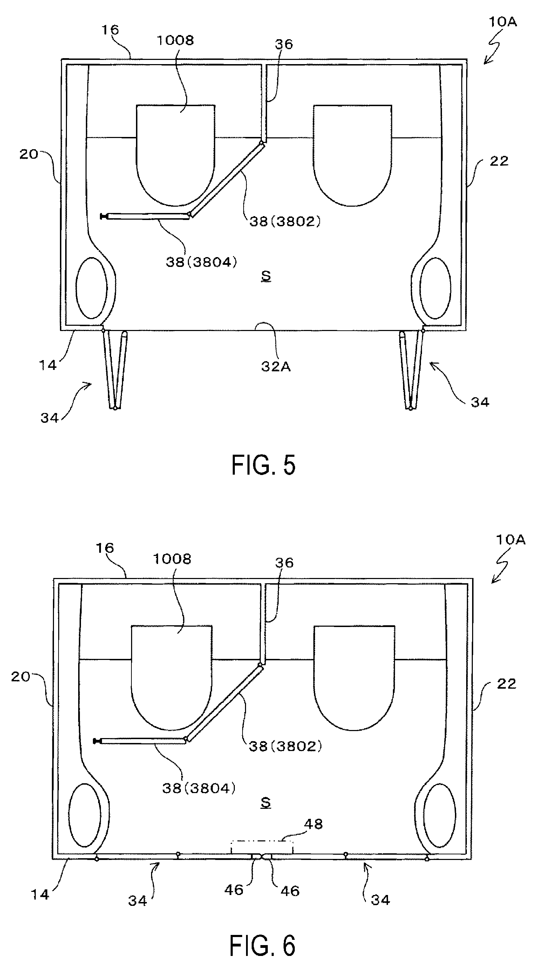

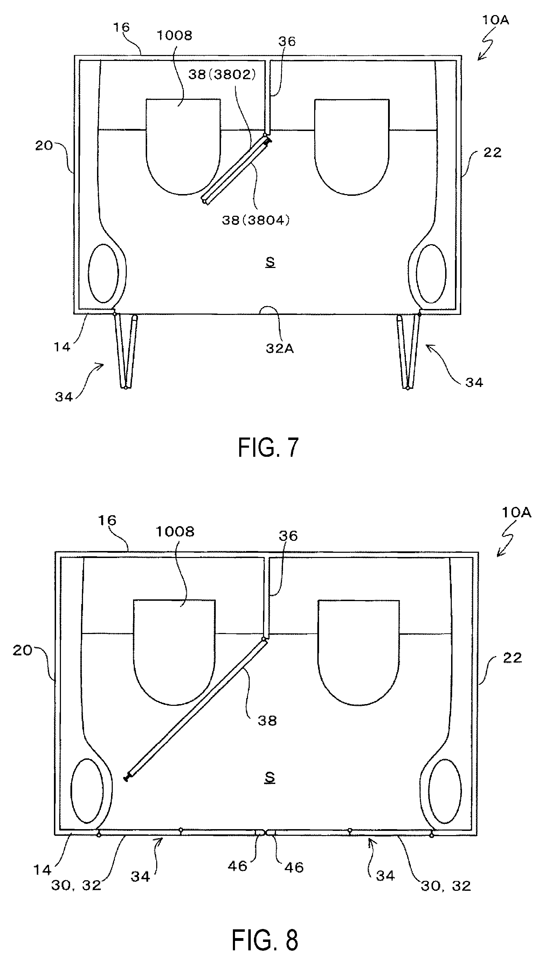

As illustrated in FIG. 3, the movable wall section 38 separates the two lavatories 28A, 28B within the aircraft lavatory unit 10A when disposed at the standard position, and, as illustrated in FIGS. 5 and 7, joins the two lavatories 28A, 28B, creating a broad space S formed by the two joined two lavatories 28A, 28B within the aircraft lavatory unit 10A, when disposed at the non-standard position. At the non-standard position illustrated in FIG. 5, the first wall panel 3802 and the second wall panel 3804 extend in a curve around the toilet 1008 of the lavatory 28A, and, at the non-standard position illustrated in FIG. 7, the first wall panel 3802 and the second wall panel 3804 are collapsed upon each other and disposed near the toilet 1008 of the lavatory 28A.

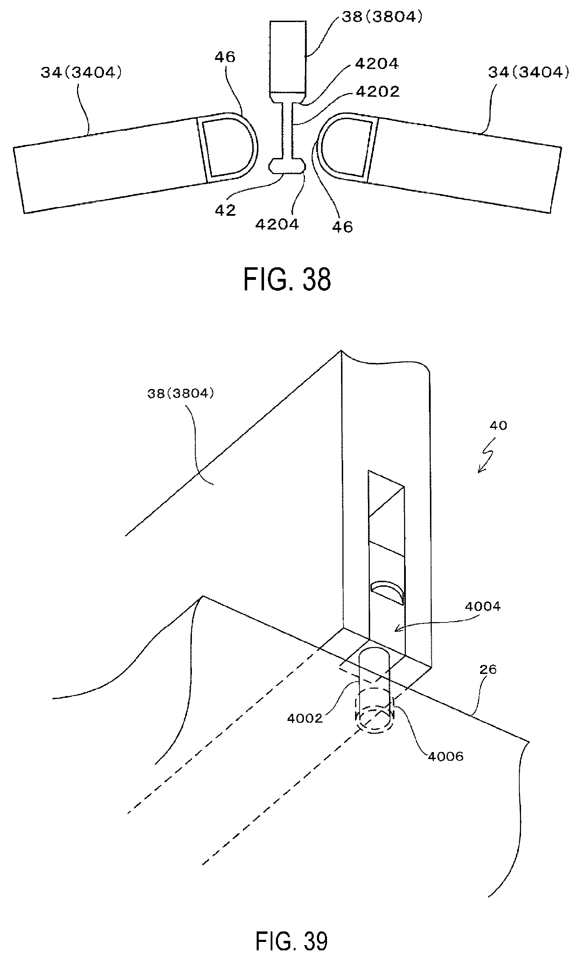

The movable wall section 38 is releasably secured at the standard position by the securing mechanisms 40 illustrated in FIG. 39.

The securing mechanisms 40 are provided between the lower end of the movable wall section 38 and the floor 26 and between the upper end of the movable wall section 38 and the ceiling 24.

In the present embodiment, the securing mechanisms 40 are provided between the lower end of the end section of the second wall panel 3804 (where the fitting 42, to be described below, is attached) positioned opposite the fixed wall section 36 and the floor 26 of the lavatories 28A, 28B, and between the upper end of the end section of the second wall panel 3804 and the ceiling 24 of the lavatories 28A, 28B.

The securing mechanisms 40 are also provided between the lower end of the end section of the first wall panel 3802 positioned near the second wall panel 3804 (i.e., the side on which the hinge H2 is present) and the floor 26 of the lavatories 28A, 28B, and between the upper end of the end section of the first wall panel 3802 and the ceiling 24 of the lavatories 28A, 28B.

Various known mechanisms, such as the structure illustrated in FIG. 39 comprising a flush bolt 4004 possessing a rod 4002 capable of extending from and retracting into the lower end of the end section of the second wall panel 3804 and a latch hole 4006, provided in the floor 26, into which the tip of the rod 4002 is inserted, can be adopted for the securing mechanisms 40, and a securing mechanism 40 can also be provided in the upper end of the end section of the second wall panel 3804 and the ceiling 24.
Securing mechanisms 40 having the structure described above are provided in the lower end of the end section of the first wall panel 3802 and the floor 26, and in the upper end of the end section of the first wall panel 3802 and the ceiling 24.

As illustrated in FIG. 3, the end section of the movable wall section 38 positioned opposite the fixed wall section 36 is positioned in the center of the front wall 14, forming the boundary between the lavatories 28A, 28B on the front wall 14. In the present embodiment, the end section of the second wall panel 3804 is positioned in the center of the front wall 14, forming a boundary between the lavatories 28A, 28B on the front wall 14.
The first wall panel 3802 and the second wall panel 3804 each comprise a panel constituting a wall section, and, as illustrated in FIG. 38, the end section of the second wall panel 3804 is constituted by a fitting 42 having an I-shaped cross-section, the fitting comprising a web 4202 and flanges 4204 on both sides thereof, attached to the end section of the panel.
A known material, including metal materials such as aluminum alloy or synthetic resin materials, can be used for the material of the fitting 42.

As illustrated in FIGS. 3 and 4, the doors 34 of the entrances 30 of the lavatories 28A, 28B fold in half, and are each constituted by a first door panel 3402 and a second door panel 3404 foldably joined by a hinge H3. The bases of the first door panels 3402 near the side walls 20, 22 are swingably linked to vertical edges of the openings 32 by hinges H4, and the end sections of the second door panels 3404 near the movable wall section 38 constitute free ends that move so as to open and close the openings 32. Accordingly, the openings 32 of the doors 34 are closed when the first door panels 3402 and the second door panels 3404 unfold, and open when the first door panels 3402 and the second door panels 3404 are folded.

As illustrated in FIG. 3, locking devices 44 for locking the doors 34 closed are provided between the end sections of the second door panels 3404 and the panel constituting the end section of the second wall panel 3804.
Various known structures, such as one comprising a body, provided at the end section of the second door panel 3404 and comprising a handle linked to a locking member, and an engagement hole, provided in the panel, with which the locking member engages, can be adopted for the locking devices 44.
The opening and closing of the doors 34 of the entrances 30 is guided by rollers on the upper ends of the doors 34 that are engaged with rails provided on the upper ends of the openings 32.
As illustrated in FIG. 38, elastically deformable seal members 46 are attached to the free ends of the doors 34, the seal members 46 being formed, for example, from silicone rubber and having a hollow shape.

As illustrated in FIG. 3, when the doors 34 of the entrances 30 are closed with the movable wall section 38 in the standard position, the seal members 46 of the doors 34 of the entrances 30 elastically contact the web 4202 of the fitting 42, causing the openings 32 to enter a closed state.
To move the movable wall section 38 from the standard position to the non-standard position, the linkage of the movable wall section 38 to the floor 26 and the ceiling 24 by the securing mechanisms 40 is released, at least one of the doors 34 of the entrances 30 is opened and the sandwiching of the fitting 42 between the seal members 46 is released before the movable wall section 38 is moved, allowing for unobstructed movement of the movable wall section 38.
As illustrated in FIG. 5, with the doors 34 of the entrances 30 open and the movable wall section 38 at the non-standard position, the two openings 32 in the front wall 14 connect to form a large opening 32A that facilitates the entrance and exit of wheelchair users into the aircraft lavatory unit 10A.
As illustrated in FIG. 6, when the doors 34 of the entrances 30 are closed with the movable wall section 38 at the non-standard position, the seal members 46 of the doors 34 of the entrances 30 elastically contact, thereby placing the openings 32 of the lavatories 28A, 28B into a closed state, thereby closing the front wall 14 including the openings 32 and doors 34 of the lavatories 28A, 28B. Within the aircraft lavatory unit 10A, the movable wall section 38 has been moved toward the lavatory 28A, creating a broad space S in which the two lavatories 28A, 28B are connected and allowing for easier use of the aircraft lavatory unit 10A by wheelchair users.
With the movable wall section 38 at the non-standard position and the doors 34 of the entrances 30 closed, a locking device 48 for stopping the movement of the doors 34 of the entrances 30 in the opening direction is provided.
Various known structures, such as one comprising a hook provided on the second door panel 3404 of one of the doors 34 and a hook engagement hole provided in the second door panel 3404 of the other door 34, can be adopted for the locking device 48.

In the present embodiment, the movable wall section 38 can be moved to the standard position to allow for separate use of the two lavatories 28A, 28B, as in the case of a conventional aircraft lavatory unit provided with two lavatories. When a wheelchair user wishes to use the aircraft lavatory unit 10A, the following operations are performed.
First, as illustrated in FIG. 4, at least one of the doors 34 of the lavatories 28A, 28B is opened, releasing the fitting 42 from being sandwiched between the seal members 46, the linkage of the movable wall section 38 to the floor 26 and the ceiling 24 by the securing mechanisms 40 is released, and the movable wall section 38 is moved to the non-standard position.
In the present embodiment, as illustrated in FIG. 5, the movable wall section 38 is folded and moved into the lavatory 28A.
As a result, a large opening 32A formed by joining the two openings 32 is created in the front wall 14 to allow entrance into and exit from the aircraft lavatory unit 10A. The series of operations performed in order to move the movable wall section 38 from the standard position to the non-standard position is ordinarily performed by the cabin crew.

At this point, the wheelchair user enters the interior of the lavatories 28A, 28B through the large opening 32A.

Next, as illustrated in FIG. 6, the doors 34 of the lavatories 28A, 28B are closed, bringing the seal members 46 on the end sections thereof into elastic contact. This closes the front wall 14 including the openings 32 and doors 34 of the lavatories 28A, 28B.

Accordingly, the interior of the aircraft lavatory unit 10A is cut off from the exterior, protecting the privacy of the wheelchair user.

Because the movable wall section 38 has been moved into the one lavatory 28A, connecting the two lavatories 28A, 28B, a broad space S capable of accommodating a wheelchair while the aircraft lavatory unit 10A is in use has been formed in the interior of the aircraft lavatory unit 10A.

This facilitates usage of the aircraft lavatory unit 10A by wheelchair users by allowing, for example, users to enter the aircraft lavatory unit 10A in a wheelchair and use the lavatory with the wheelchair inside the aircraft lavatory unit 10A.

When the wheelchair user is ready to exit the aircraft lavatory unit 10A, the reverse of the procedure described above is performed to open the doors 34 of the lavatories 28A, 28B, and the wheelchair user exits the aircraft lavatory unit 10A.
Afterward, the cabin crew member moves the movable wall section 38 to the standard position and attaches it to the floor 26 and the ceiling 24 using the securing mechanisms 40.
This allows for separate use of the two lavatories 28A, 28B in the single aircraft lavatory unit 10A.

In accordance with the present embodiment, the movable wall section 38 can be moved to the standard position to allow for separate use of the two lavatories 28A, 28B of the aircraft lavatory unit 10A, or the movable wall section 38 can be moved to the non-standard position to connect the two lavatories 28A, 28B and create a broad space S capable of accommodating a wheelchair within the aircraft lavatory unit 10A while the lavatory is in use.
Accordingly, a single aircraft lavatory unit 10A is capable of serving both as an aircraft lavatory unit provided with two lavatories 28A, 28B for non-disabled passengers or as a wheelchair-accessible aircraft lavatory unit 10A provided with a single lavatory through the simple operation of moving the movable wall section 38.
The need to provide a large separate wheelchair-accessible aircraft lavatory unit apart from the aircraft lavatory unit 10A for non-disabled passengers is thus eliminated, thereby reducing the space occupied by aircraft lavatory units in the interior of the aircraft, which is advantageous in increasing the number of seats. In addition, in accordance with the present embodiment, a large opening 32A formed by connecting the two openings 32 can be formed in the front wall 14 by moving the movable wall section 38 to the non-standard position and opening the doors 34 of the lavatories 28A, 28B, which is advantageous in allowing for easy access to the aircraft lavatory unit 10A.

The movable wall section 38 may also be constituted by a single panel and a fitting 42 attached to the end section thereof, as illustrated in FIG. 8.

This arrangement offers an advantage over the embodiment described above in that the number of parts is reduced, but the embodiment described above offers the advantage of allowing for a larger space at the non-standard position.

### Second embodiment

Next, a second embodiment will be described.

In the following embodiment, parts that are identical or similar to those of the first embodiment will be identically labeled and description thereof will be omitted, and the description will focus on the differences.

Whereas two wall panels make up the movable wall section 38 in the first embodiment, four wall panels are used in the second embodiment.

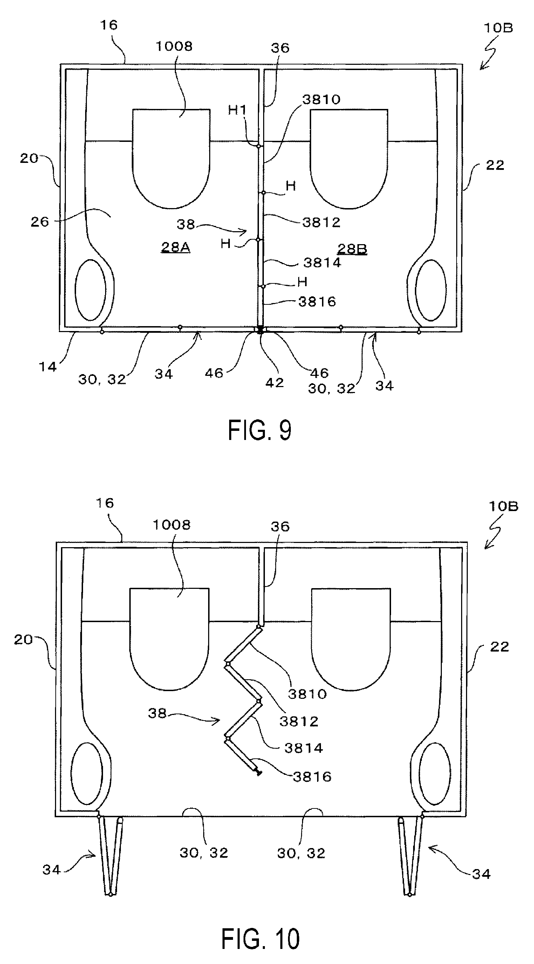

Specifically, in the present embodiment, the movable wall section 38 is made up of first through fourth wall panels 3810, 3812, 3814, 3816 swingably joined by hinges H, with the end section of the first wall panel 3810 being swingably joined to the fixed wall section 36 by a hinge H1, as illustrated in FIGS. 9 to 12.

The movable wall section 38 is releasably secured at the standard position via securing mechanisms 40 (FIG. 39) similar to those of the first embodiment, the securing mechanisms 40 being provided between multiple locations on the lower end of the end section of the fourth wall panel 3816 positioned opposite the fixed wall section 36 and the floor 26, and between multiple locations on the upper end of the end section of the fourth wall panel 3816 and the ceiling 24.
When at the standard position, the movable wall section 38 is positioned in the center of the front wall 14, as in the first embodiment, thereby forming a boundary between the lavatories 28A, 28B on the front wall 14.
The first through third wall panels 3810, 3812, 3814 each comprise a panel constituting a wall section, and the fourth wall panel 3816 comprises a fitting 42 attached to the end section of the panel, as in the first embodiment.
As illustrated in FIG. 9, the movable wall section 38 is placed in the standard position by unfolding and aligning the first through fourth wall panels 3810, 3812, 3814, 3816 in the widthwise direction.
As illustrated in FIGS. 10 to 12, the movable wall section 38 is moved to the non-standard position by folding and collapsing the first through fourth wall panels 3810, 3812, 3814, 3816 upon each other and disposing them in front of the cabinet 1010 to the side of the toilet 1008 of the lavatory 28A.

The second embodiment described above yields effects similar to those yielded by the first embodiment.

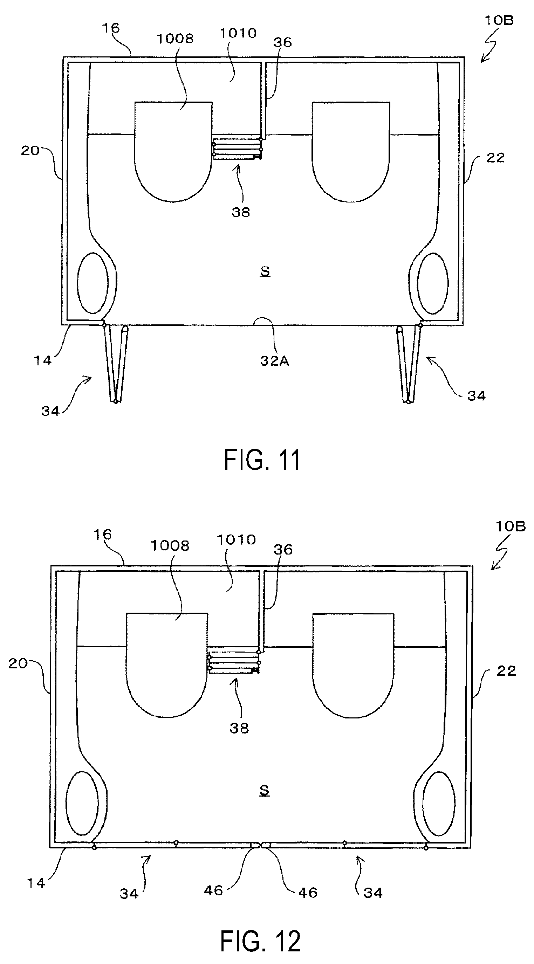

In addition, in the second embodiment, when the movable wall section 38 is at the non-standard position, the first through fourth wall panels 3810, 3812, 3814, 3816 are gathered in front of the cabinet 1010 to the side of the toilet 1008 of the lavatory 28A, as illustrated in FIG. 12, which is advantageous in joining the two lavatories 28A, 28B to create a broad space S and in creating a broader space capable of accommodating a wheelchair while the lavatory is in use.

The foregoing has been a description of an instance of the second embodiment in which the movable wall section 38 is constituted by four wall panels, but there may also be three wall panels, or five or more.

### Third Embodiment

Next, a third embodiment will be described.

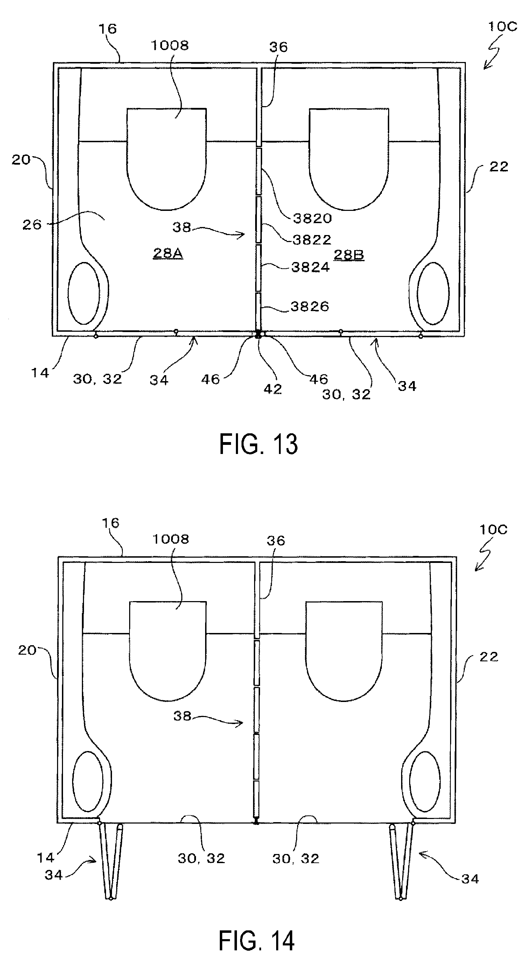

The third embodiment differs from the second embodiment in that the movable wall section 38 is constituted by four disconnected first through fourth wall panels 3820, 3822, 3824, 3826, as illustrated in FIGS. 13 to 16 and FIGS. 40A and 40B.

Moreover, in the third embodiment, unlike the second embodiment, a guide mechanism 50 for guiding the plurality of wall panels between the standard position and the non-standard position is provided in the ceiling 24.

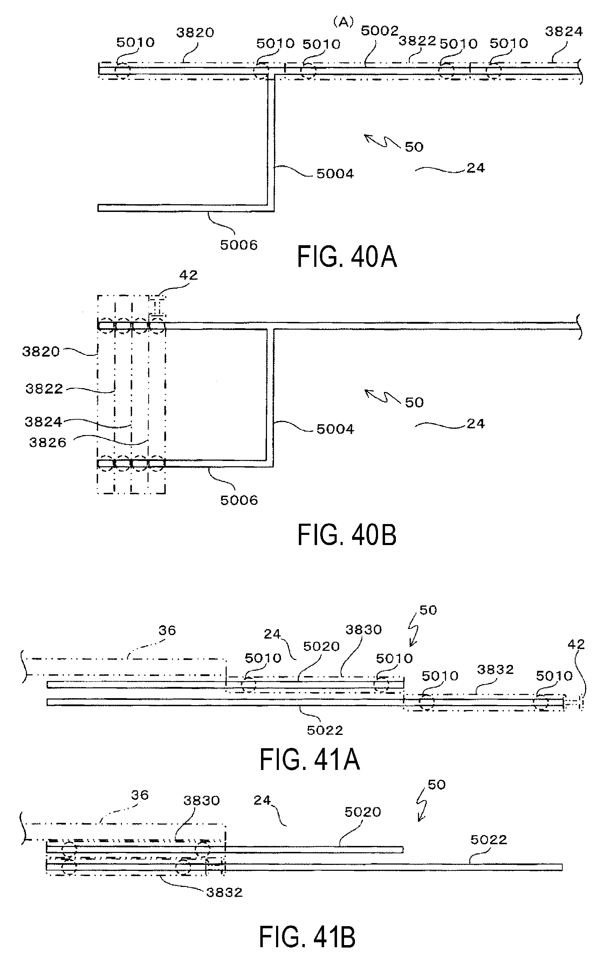

As illustrated in FIGS. 40A and 40B, the guide mechanism 50 is constituted by rails provided in the ceiling 24.

The rails are constituted by a first rail 5002 extending a location on the ceiling 24 in front of the fixed wall section 36 toward the front wall 14, a second rail 5004 that connects to the first rail 5002 at a location near the fixed wall section 36 and extends in a direction orthogonal to that of the first rail 5002, and a third rail 5006 that is connected to the end of the second rail 5004 and extends to the rear wall 16 in a direction parallel to that of the first rail 5002.

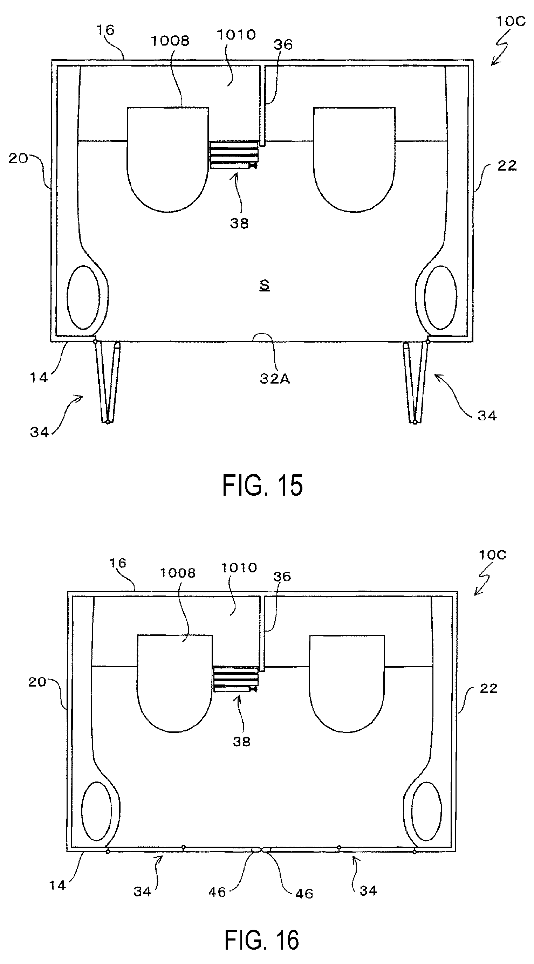

The first through fourth wall panels 3820, 3822, 3824, 3826 are suspended from the rails by a pair of runners 5010 disposed spaced apart from each other on the upper ends of each of the wall panels, and are capable of moving along the rails.
As illustrated in FIGS. 13, 14, and 49A, the movable wall section 38 is moved to the standard position by aligning the first through fourth wall panels 3820, 3822, 3824, 3826 in the widthwise direction along the first rail 5002.
As illustrated in FIGS. 15, 16, and 40B, the movable wall section 38 is moved to the non-standard position by moving one of the runners 5010 of each of the first through fourth wall panels 3820, 3822, 3824, 3826 to the third rail 5006 via the second rail 5004 while leaving the other of the runners 5010 positioned on the first rail 5002 so that the panels are collapsed upon each other in front of the cabinet 1010 to the side of the toilet 1008 of the one lavatory 28A.

The movable wall section 38 is releasably secured at the standard position by the securing mechanisms 40 (FIG. 39) similar to those of the first embodiment, with the securing mechanisms 40 being provided between multiple locations on the lower ends of the first through fourth wall panels 3820, 3822, 3824, 3826 and the floor 26.
When the movable wall section 38 is at the standard position, the fitting 42 on the fourth wall panel of the movable wall section 38 is positioned at the center of the front wall 14, as in the first embodiment, thereby forming a boundary between the lavatories 28A, 28B on the front wall 14.
The first through third wall panels 3820, 3822, 3824 each comprise a panel constituting a wall section, and the fourth wall panel comprises a fitting attached to the end section of the panel, as in the first embodiment.

The third embodiment described above yields effects similar to those yielded by the first embodiment.

In addition, in the third embodiment, as in the second embodiment, when the movable wall section 38 is at the non-standard position, the first through fourth wall panels 3820, 3822, 3824, 3826 are gathered in front of the cabinet 1010 to the side of the toilet 1008 of the lavatory 28A, as illustrated in FIG. 16, which is advantageous in joining the two lavatories 28A, 28B to create a broad space S and in creating a broader space capable of accommodating a wheelchair while the lavatory is in use.

The foregoing has been a description of an instance of the third embodiment in which the movable wall section 38 is constituted by four wall panels, but there may also be three wall panels, or five or more.

### Fourth Embodiment

Next, a fourth embodiment will be described.

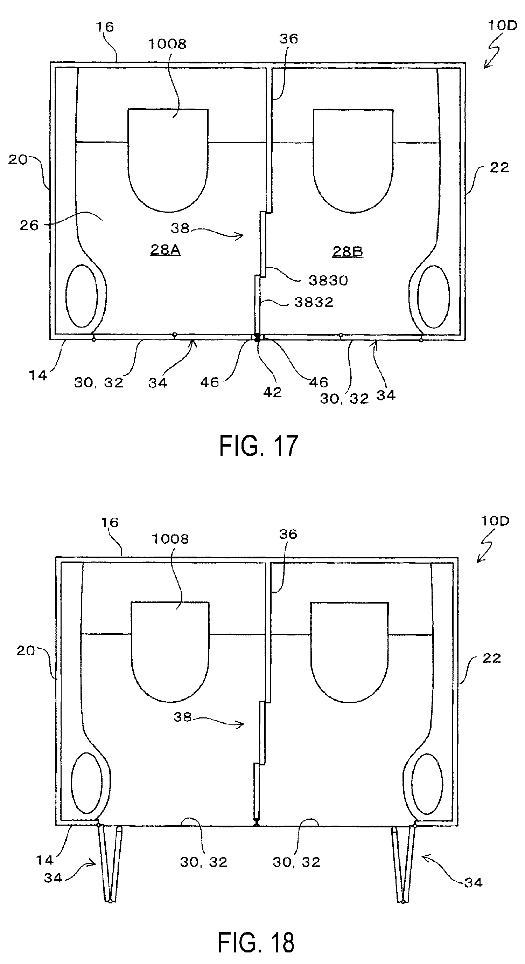

The fourth embodiment differs from the third embodiment in that, as illustrated in FIGS. 17 to 20 and FIG. 41A and 41B, the fixed wall section 36 is longer than in the third embodiment, and is therefore constituted by first and second wall panels 3830, 3832, two less than in the third embodiment, and in that the guide mechanism 50 is constituted by first and second rails 5020, 5022 provided for each of the first and second wall panels 3830, 3832.

Specifically, as illustrated in FIG. 41A, the guide mechanism 50 is constituted by the first and second rails 5020, 5022, provided on the ceiling 24, that extend in parallel from locations on the ceiling 24 in front of the fixed wall section 36 toward the front wall 14.

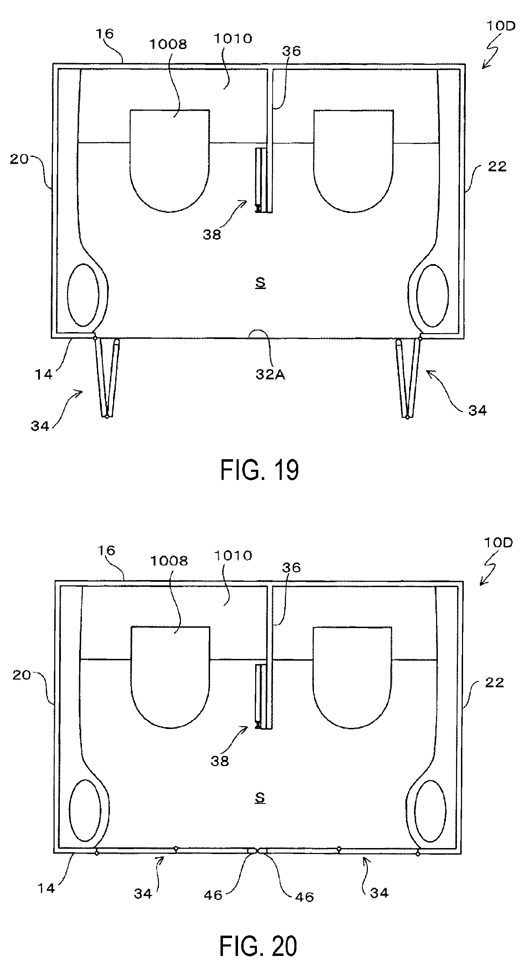

As illustrated in FIGS. 41A and 41B, the first and second wall panels 3830, 3832 are suspended from the first and second rails 5020, 5022 by a pair of runners 5010 spaced apart from each other on the upper end sections of each of the wall panels, as in the third embodiment, and are capable of moving along the first and second rails 5020, 5022.
As illustrated in FIGS. 17, 18, and 41A, the movable wall section 38 is moved to the standard position by aligning the first and second wall panels 3830, 3832 in the widthwise direction along the first and second rails 5020, 5022.
As illustrated in FIGS. 19, 20, and 41B, the movable wall section 38 is moved to the non-standard position by moving the first and second wall panels 3830, 3832 toward the fixed wall 36 without changing the orientation thereof, thereby collapsing the panels upon each other and disposing them in front of the cabinet 1010 to the side of the toilet 1008 of the lavatory 28A.

The movable wall section 38 is releasably secured at the standard position by the securing mechanisms 40 (FIG. 39) similar to those of the first embodiment, with the securing mechanisms 40 being provided between multiple locations on the lower ends of the first and second wall panels 3830, 3832, as in the third embodiment.
When at the standard position, the fitting 42 on the third wall panel of the movable wall section 38 is positioned at the center of the front wall 14, as in the third embodiment, thereby forming a boundary between the lavatories 28A, 28B on the front wall 14.
The first and second wall panels 3830, 3832 each comprise a panel constituting a wall section, and the second wall panel 3832 comprises a fitting 42 attached to the end section of the panel, as in the third embodiment.

The fourth embodiment described above yields effects similar to those yielded by the first embodiment.

In addition, in the fourth embodiment, when the movable wall section 38 is at the non-standard position, the first and second wall panels 3830, 3832 are gathered in front of the cabinet 1010 to the side of the toilet 1008 of the lavatory 28A, as illustrated in FIG. 20, which is advantageous in joining the two lavatories 28A, 28B to create a broad space S and in creating a broader space capable of accommodating a wheelchair while the lavatory is in use.

The foregoing has been a description of an instance of the fourth embodiment in which the movable wall section 38 is constituted by two wall panels, but there may also be three or more wall panels.

### Fifth Embodiment

Next, a fifth embodiment will be described.

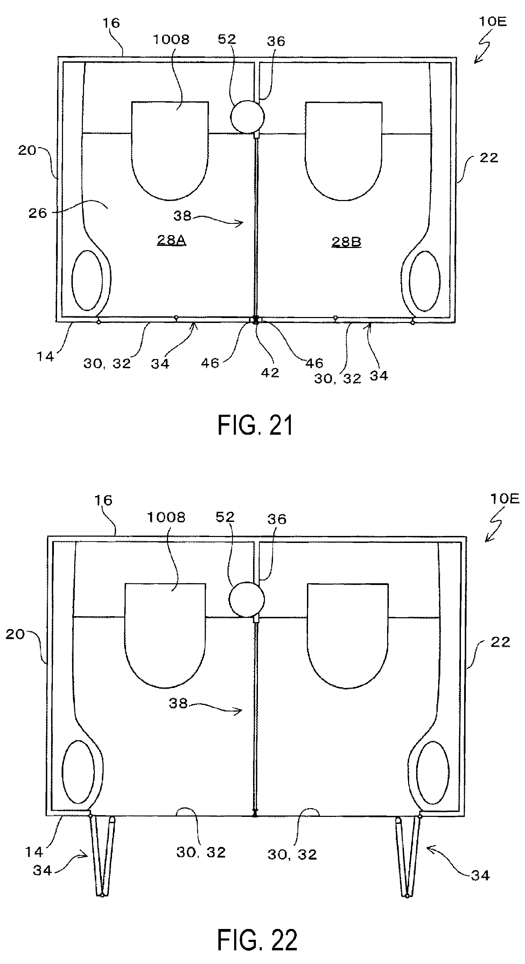

As illustrated in FIGS. 21 to 24, the fifth embodiment differs from the third and fourth embodiments in that the movable wall section 38 is in a wrappable, containable form.

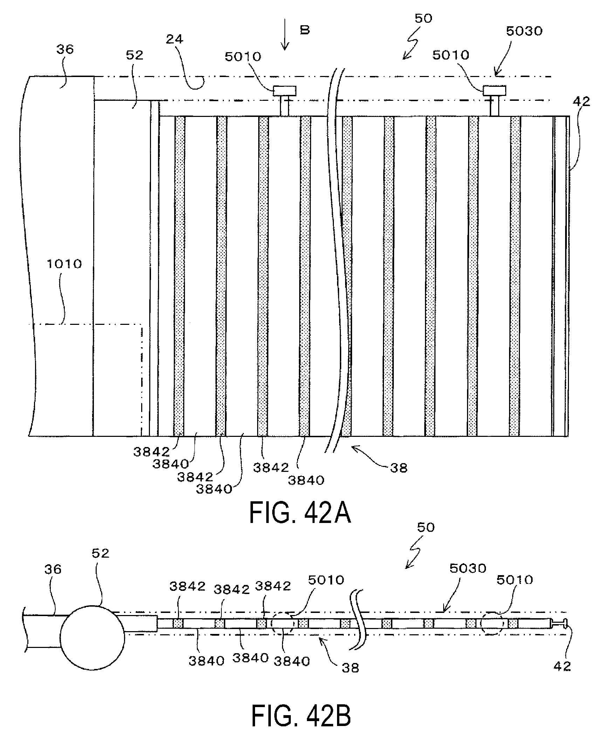

As illustrated in FIGS. 42A and 42B, the guide mechanism 50 is constituted by a rail 5030 that is provided on the ceiling 24 and extends from a location on the ceiling 24 to the front of the fixed wall section 36 toward the front wall 14, as in the third and fourth embodiments.

As illustrated in FIGS. 42A and 42B, the movable wall section 38 is provided with a plurality of elongated strips 3840 that are taller than they are wide, extend from the ceiling 24 to the floor 26, and are formed from a hard material, and a plurality of linking members 3842 that link the strips 3840 and are formed from a soft material, and is capable of being wrapped around an axis that is parallel to the height direction of the strips 3840.
One end of the movable wall section 38 is attached within a wrapping housing container 52 provided in front of the cabinets 1010 from the floor 26 to the ceiling 24, and the movable wall section 38 wraps up in a cylindrical shape and is housed within the housing container 52.
A fitting 42 is attached to a strip 3840 positioned at the other end of the movable wall section 38.

The movable wall section 38 is suspended from the rail 5030 by a plurality of runners 5010 provided at intervals on the upper end section of the movable wall section 38, and is capable of moving along the rail 5030.

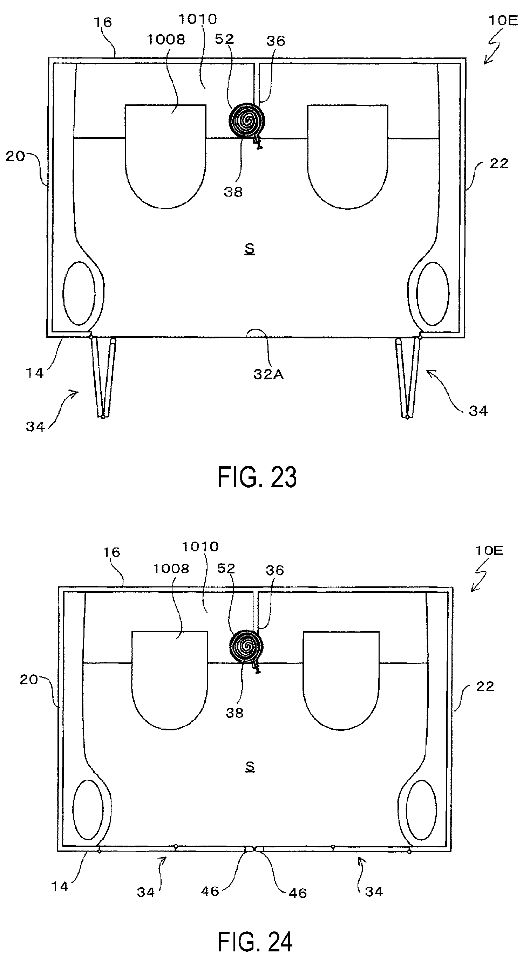

As illustrated in FIGS. 21, 22, 42A, and 42B, the movable wall section 38 is moved to the standard position by being drawn out of the housing container 52. As illustrated in FIGS. 23 and 24, the movable wall section 38 is moved to the non-standard position by being wrapped up within the housing container 52, thereby being disposed in front of the cabinet 1010 to the side of the toilet 1008 of the lavatory 28A.

The plurality of strips 3840 spaced along the widthwise direction of the movable wall section 38 are releasably secured at the standard position by the securing mechanisms 40 (FIG. 39) similar to those of the first embodiment, the securing mechanisms 40 being provided between multiple locations on the lower ends of the plurality of strips 3840 and the floor 26, as in the third and fourth embodiments.
When the movable wall section 38 is at the standard position, the fitting 42 on the other end of the movable wall section 38 is positioned at the center of the front wall 14, as in the first embodiment, thereby forming a boundary between the lavatories 28A, 28B on the front wall 14.

The fifth embodiment described above yields effects similar to those yielded by the first embodiment.

In addition, in the fifth embodiment, when the movable wall section 38 is at the non-standard position, the movable wall section 38 is gathered in front of the cabinet 1010 to the side of the toilet 1008 of the lavatory 28A, as illustrated in FIG. 24, which is advantageous in joining the two lavatories 28A, 28B to create a broad space S and in creating a broader space capable of accommodating a wheelchair while the lavatory is in use.

### Sixth Embodiment

Next, a sixth embodiment will be described.

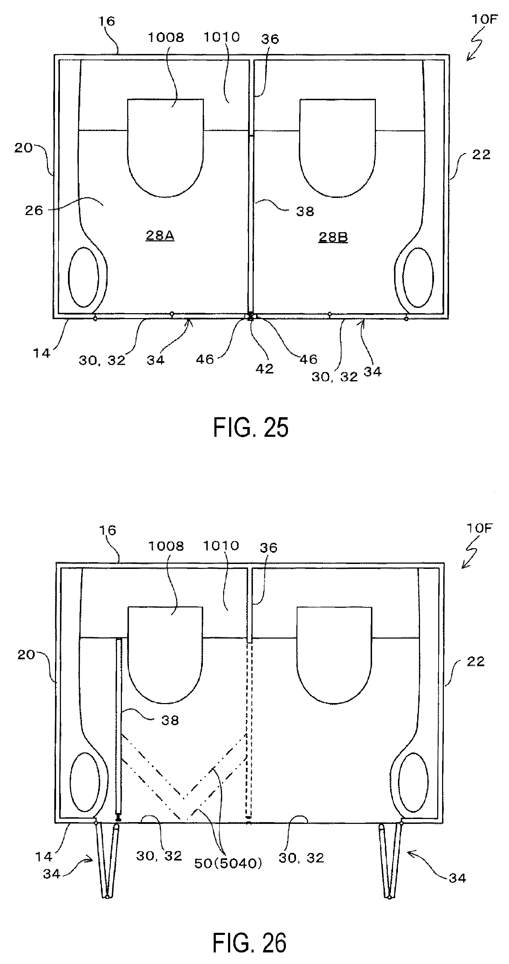

As illustrated in FIGS. 25 to 27, the sixth embodiment differs from the third and fourth embodiments in that the movable wall section 38 is a single piece.

As in the third and fourth embodiments, there is provided a guide mechanism 50 for moving the movable wall section 38 between the standard position and the non-standard position, the guide mechanism 50 being constituted by two rails 5040 provided on the ceiling 24, as illustrated in FIG. 26.

The two rails 5040 extend from the position of the boundary between the two lavatories 28A, 28B to near the side wall 20 of the lavatory 28A, the two ends of the rails 5040 with respect to their directions of extension being positioned near the rear wall 16, and the middle sections of the rails 5040 being bent in shape near the front wall 14.

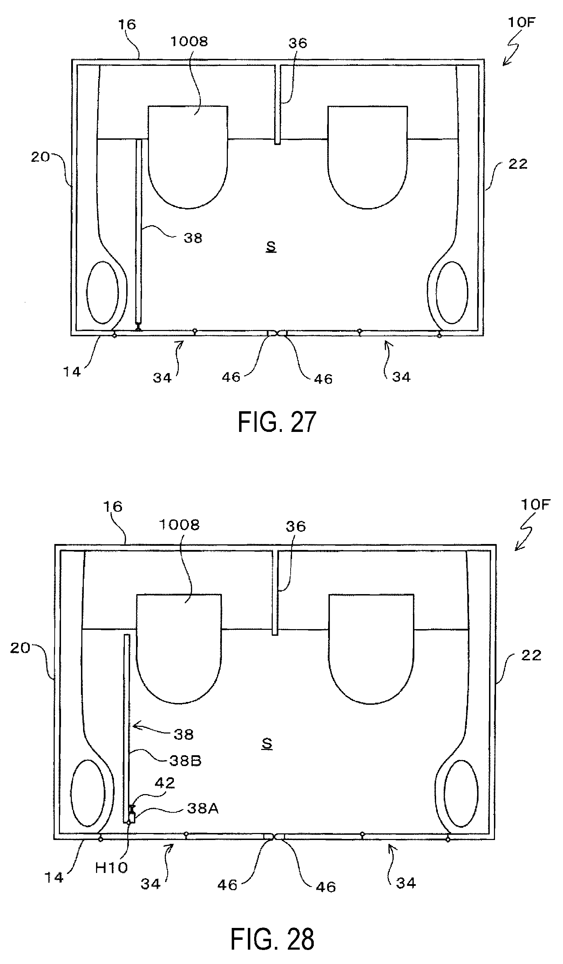

The movable wall section 38 is constituted by a single panel, with one end of the movable wall section 38 being capable of contacting the fixed wall section 36, and a fitting 42 being attached to the panel at the other end of the movable wall section 38.
The movable wall section 38 is suspended from the rails 5040 by two runners provided spaced apart from each other on the upper end section of the movable wall section 38, and is capable of moving along the rails 5040.
As illustrated in FIG. 25, the movable wall section 38 is moved to the standard position by being moved to a middle position between the two lavatories 28A, 28B, a fitting 42 at the end section of the panel forming the boundary between the lavatories 28A, 28B on the front wall 14 at the standard position, and is releasably secured at the standard position by the securing mechanisms 40 (FIG. 39) similar to those of the first embodiment, with the securing mechanisms 40 being provided between a plurality of locations on the lower end of the end section of the movable wall section 38 and the floor 26, as in the third and fourth embodiments.
As illustrated in FIGS. 26 and 27, the movable wall section 38 is moved using the runners and rails 5040 to a non-standard position near the side wall 20 of the lavatory 28A.
In this case, the rails are bent in shape so that the movable wall section 38 does not interfere with the toilet 1008.

The sixth embodiment described above yields effects similar to those yielded by the first embodiment.

In addition, in the sixth embodiment, the movable wall section 38 is disposed near the side walls 20, 22 of the lavatory 28A when at the non-standard position, as illustrated in FIG. 27, which is advantageous in connecting the two lavatories 28A, 28B to create a broad space S and in creating a broader space capable of accommodating a wheelchair while the lavatory is in use.

In the sixth embodiment, an arrangement in which a tip section 38A near the fitting 42 of the movable wall section 38 and a remaining section 38B of the movable wall section 38 are swingably joined by a hinge H10, as illustrated in FIG. 28, is also acceptable.

In this arrangement, the tip section is bent at when the movable wall section is at the non-standard position, which is advantageous in preventing interference between the fitting 42 of the movable wall section 38 and the door 34 of the lavatory 28A.

### Seventh Embodiment

Next, a seventh embodiment will be described.

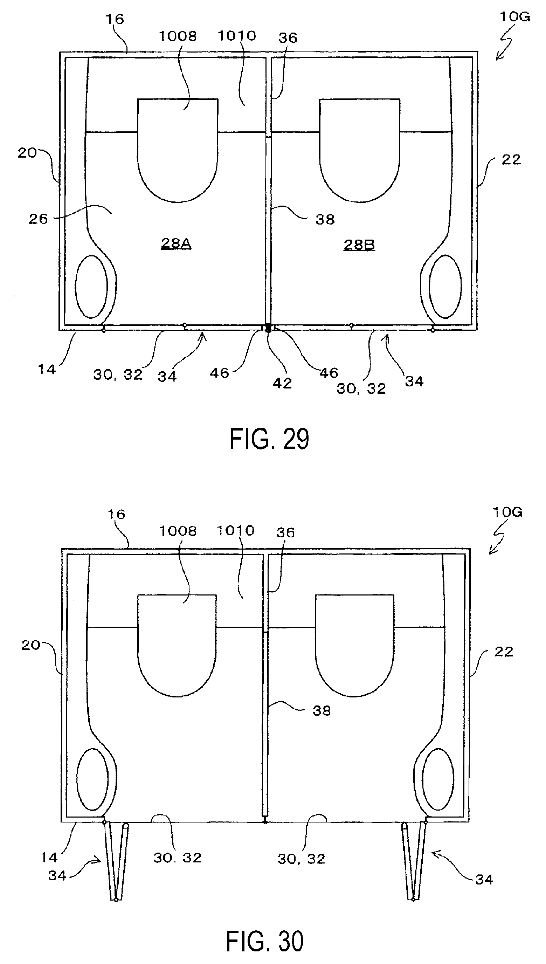

The seventh embodiment differs from the sixth embodiment in that a guide mechanism 50 is not provided, as illustrated in FIGS. 29 to 32.

The movable wall section 38 is releasably secured at the standard position by the securing mechanisms 40 (FIG. 39) similar to those of the first embodiment, the securing mechanisms 40 being provided between multiple locations on the lower end of the movable wall section 38 and the floor 26, and between multiple locations on the upper end of the movable wall section 38 and the ceiling 24.

When the movable wall section 38 is at the standard position, as illustrated in FIG. 29, the fitting 42 at the end section of the movable wall section 38 forms the boundary between the lavatories 28A, 28B on the front wall 14.

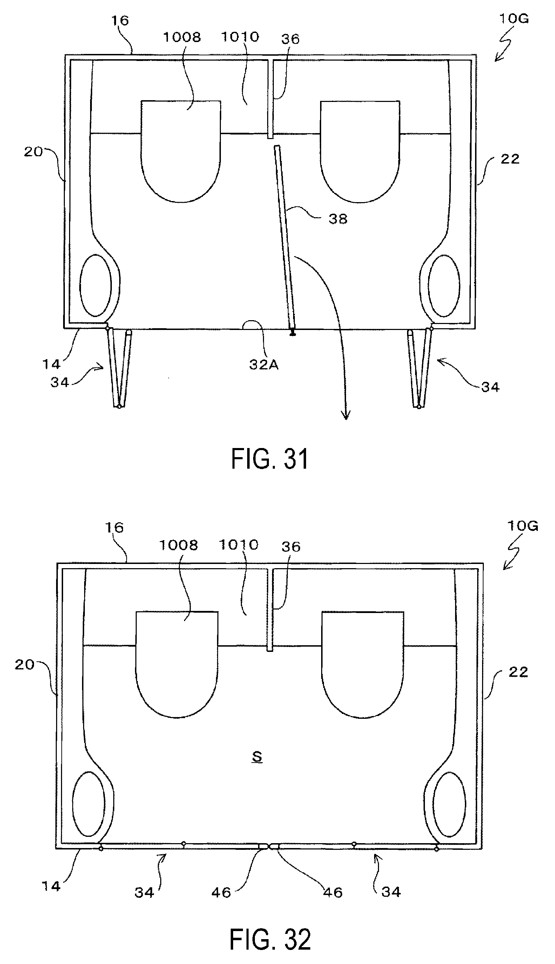

As illustrated in FIGS. 30 and 31, the movable wall section 38 is moved to the non-standard position by releasing the securing mechanisms 40 and removing the wall section to the outside of the aircraft lavatory unit 10G; when the doors 34 of the lavatories 28A, 28B are closed in this non-standard position, as illustrated in FIG. 32, the seal members 46 of the doors 34 are placed into elastic contact and close the front wall 14, as in the first embodiment.

The seventh embodiment described above yields effects similar to those yielded by the first embodiment.

In addition, in the seventh embodiment, the movable wall section 38 is positioned outside the aircraft lavatory unit 10G when in the non-standard position, as illustrated in FIG. 32, which is advantageous in joining the two lavatories 28A, 28B to create a broad space S and in creating a broader space capable of accommodating a wheelchair while the lavatory is in use.

### Eighth Embodiment

Next, an eighth embodiment will be described.

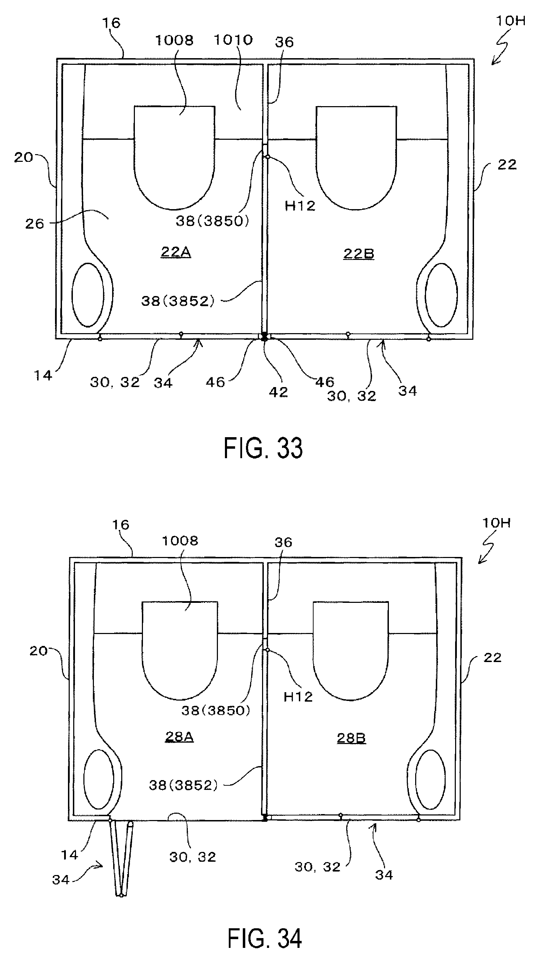

The eighth embodiment differs from the seventh embodiment in that a guide mechanism 50 is provided, as illustrated in FIGS. 33 to 37.

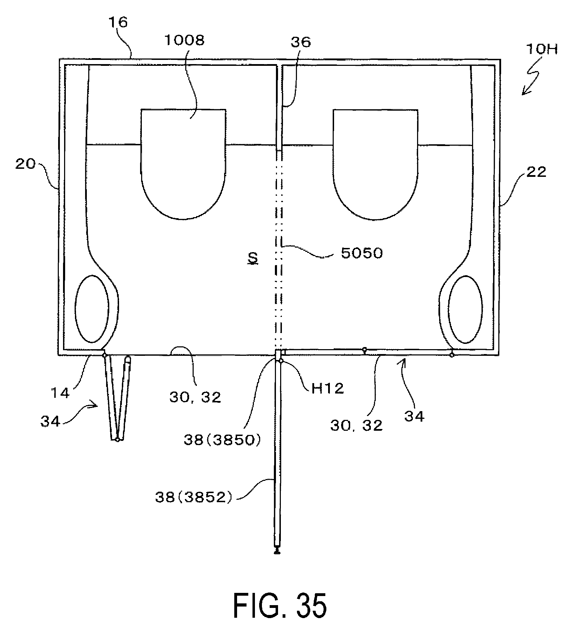

Specifically, the guide mechanism 50 is constituted by a rail 5050 that is provided on the ceiling 24 and extends from the rear wall 16 toward the front wall 14, as shown by the imaginary lines in FIG. 35.

As illustrated in FIG. 33, the movable wall section 38 is constituted by a first wall panel 3850 constituted by a section near the fixed wall section 36, and a second wall panel 3852 foldably secured to the first wall panel 3850 by a hinge H12.
As in the seventh embodiment, the fitting 42 at the end section of the second wall panel 3852 is positioned at the center of the front wall 14 when the movable wall section 38 is at the standard position, thereby forming a boundary between the lavatories 28A, 28B on the front wall 14.
The first wall panel 3850 and second wall panel 3852 are releasably secured at the standard position by the securing mechanisms 40 (FIG. 39) similar to those of the first embodiment, the securing mechanisms 40 being provided between the lower end of the first wall panel 3850 and the floor 26 and between multiple locations on the lower end of the second wall panel 3852 and the floor 26.
As illustrated in FIG. 35, the first wall panel 3850 and the second wall panel 3852 are suspended from the rail 5050 by runners, and are capable of moving along the rail 5050.

The movable wall section 38 is moved from the standard position to the non-standard position in the following manner.

As illustrated in FIGS. 34 and 35, one door 34 is opened, the securement of the movable wall section 38 to the floor 26 by the securing mechanisms 40 is released, and the movable wall section 38 is moved toward the front wall 14. In this case, the second wall panel 3852 is moved away from the standard position toward the front wall 14 until the entirety thereof is positioned outside the aircraft lavatory unit 10H and the runners of the first wall panel 3850 are positioned at the end of the rail 5050.

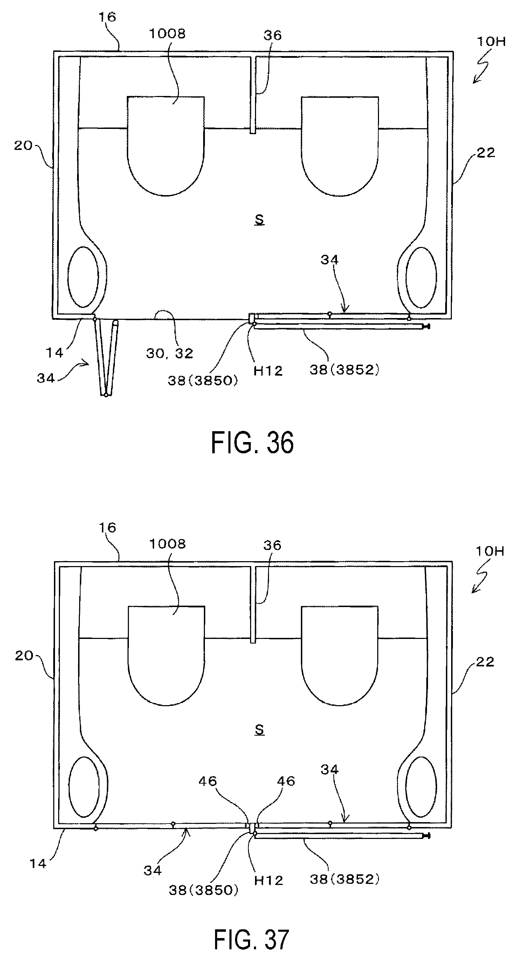

Next, as illustrated in FIG. 36, the second wall panel 3852 is swung around the hinge H12 and positioned in front of the closed door 34. This positioning of the first wall panel 3850 and the second wall panel 3852 constitutes the non-standard position.

The movable wall section 38 is moved from the non-standard position to the standard position by following the reverse of the operation described above.

As illustrated in FIG. 37, when the movable wall section 38 is at the non-standard position, the seal members 46 of the doors 34 of the lavatories 28A, 28B elastically contact each other with the second wall panel 3852 disposed therebetween, thereby closing the front wall 14.

The eighth embodiment described above yields effects similar to those yielded by the first embodiment.
In addition, in the seventh embodiment, the movable wall section 38 is positioned outside the aircraft lavatory unit when in the non-standard position, which is advantageous in joining the two lavatories 28A, 28B to create a broad space S and in creating a broader space capable of accommodating a wheelchair while the lavatory is in use.

The descriptions of the embodiments given above feature examples in which a section of the partition wall 18 constitutes the movable wall section 38; i.e., in which the partition wall 18 is constituted by a fixed wall section 36 and a movable wall section 38. However, it is naturally possible, depending on the shape of the interior of the aircraft lavatory unit, to omit the fixed wall section 36 and have the entirety of the partition wall 18 constitute the movable wall section. However, arrangements in which part of the partition wall 18 constitutes the movable wall section 36, as in the embodiments described above, are advantageous in that they allow for a simpler structure for the securing mechanisms 40 and the guide mechanism 50 and for simpler operation of the securing mechanisms 40.
The aircraft lavatory units 10A to 10H are loaded into the interior of the aircraft through the boarding doors, and thus may need to be partially disassembled depending on the dimensions of the doors; thus, in the present invention, the term "single" in the context of the expressions "single body frame 12", "single front wall 14", "single rear wall 16", "single ceiling (ceiling wall) 24", and "single floor (bottom wall) 26" refers to a state in which these parts have been assembled within the aircraft into structurally integrated units.

### Reference Number

- 10A, 10B: Aircraft lavatory unit
- 14: Front wall
- 16: Rear wall
- 18: Partition wall
- 20, 22: Left and right side walls
- 24: Ceiling
- 26: Floor
- 28A, 28B: Lavatory
- 30: Entrance
- 32: Opening
- 32A: Large opening
- 34: Door
- 36: Fixed wall section
- 38: Movable wall section
- 40: Securing mechanism
- 42: Fitting
- 46: Sealing member
- 50: Guide mechanism

## Claims

1. An aircraft lavatory unit for installation in the interior of an aircraft, the unit comprising
two lavatories separated by a partition wall within a single body frame, at least a portion of the partition wall being configured as a movable wall section that can be moved from a standard position at which the wall separates the two lavatories to a non-standard position at which the two lavatories are joined.

2. The aircraft lavatory unit according to claim 1, further comprising
a securing mechanism for releasably securing the movable wall section to the body frame at the standard position.

3. The aircraft lavatory unit according to claim 2, further comprising
a guide mechanism for guiding the movable wall section with respect to the body frame between the standard position and the non-standard position.

4. The aircraft lavatory unit according to any one of claims 1 to 3, wherein
the body frame comprises a single rear wall, and a single front wall in which are provided entrances for each of the two lavatories and which faces the rear wall, and
the movable wall section has a width extending between the rear wall and the front wall.

5. The aircraft lavatory unit according to claim 4, wherein
one end of the movable wall section in the widthwise direction thereof is positioned at the front wall, and another end of the movable wall section in the widthwise direction thereof forms a boundary between the lavatories at the front wall,
the entrances to the lavatories are constituted by openings provided in the front wall, the one end of the movable wall section constituting edges of the openings, and doors for opening and closing the openings,
ends of the door near the edges of the openings constitute free ends that move toward and away from the edges of the openings,
elastically deformable seal members that elastically contact the edges of the openings are provided on the free ends,
when the movable wall section has been moved to the non-standard position and the doors to the lavatories are open, a large opening formed by connecting the openings of the lavatories is formed in the front wall, and
when the movable wall section has been moved to the non-standard position and the doors to the lavatories are closed, the seal members elastically contact each other, thereby closing the large opening.

6. The aircraft lavatory unit according to claim 4 or 5, wherein
the partition wall extends between the rear wall and the front wall,
the partition wall is provided with a fixed wall section that projects from the rear wall toward the front wall, and
the movable wall section constitutes that part of the partition wall that extends from an end section of the fixed wall section positioned opposite the rear wall to the front wall.

7. The aircraft lavatory unit according to any one of claims 1 to 6, wherein
the movable wall section is constituted by a plurality of wall panels foldably joined to each other.

8. The aircraft lavatory unit according to any one of claims 1 to 6, wherein
the movable wall section is constituted by a plurality of disconnected wall panels.

9. The aircraft lavatory unit according to any one of claims 1 to 6, wherein
the movable wall section is constituted by a single panel.

10. The aircraft lavatory unit according to any one of claims 1 to 6, wherein
the body frame comprises a single floor,
the movable wall section has a height orthogonal to the floor, and
the movable wall section is capable of wrapping around an imaginary axis parallel to the height direction at another end of the movable wall section positioned opposite one end thereof in the widthwise direction.
